# EUROPEAN PATENT APPLICATION

(11) **EP 4 718 509 A1**
(43) Date of publication of application: **01.04.2026**
(21) Application number: 25205808.6
(22) Date of filing: 30.09.2025
(51) Int. Cl.: H01M 4/13, H01M 50/586, H01M 10/052, H01M 50/536, H01M 50/595

(54) **SECONDARY BATTERY AND ELECTRONIC DEVICE**

(30) Priority: 30.09.2024 CN 202411388208
(71) Applicant: Ningde Amperex Technology Ltd., Ningde City, Fujian Province 352100 (CN)
(72) Inventor: ZHANG, Ying, 352100 Ningde City, Fujian Province (CN)
(74) Representative: Icosa

(57) **Abstract**

A secondary battery (100) includes a negative electrode plate (22), a positive electrode plate (21), and a separator (23). The positive electrode plate (21) includes a positive current collector (211), a first positive active material layer (212), and a positive tab (213). Along a thickness direction of the positive current collector (211), a surface of the positive current collector (211) is provided with the first positive active material layer (212). The first positive active material layer (212) is provided with a first groove (2121). The positive tab (213) is disposed in the first groove (2121) and is electrically connected to the positive current collector (211). A first positive electrode insulation layer (24) is disposed on a surface of the first positive active material layer (212) facing the negative electrode plate (22). The first positive electrode insulation layer (24) covers the first groove (2121). A first negative electrode insulation layer (24) is disposed on a surface of the negative electrode plate (22) facing the first positive active material layer (212). Along a direction perpendicular to a surface of the first negative electrode insulation layer (25), a projection of the first negative electrode insulation layer (25) on the first positive active material layer (212) covers the first groove (2121). Along a width direction of the first groove (2121), a first hole (2521) is provided on one side of the first negative electrode insulation layer (25).

## Description

### TECHNICAL FIELD

This application relates to the field of battery technology, and in particular, to a secondary battery and an electronic device.

### BACKGROUND

As a power supply of an electronic device, a secondary battery is the key to ensuring the normal use of the electronic device. Currently, in order to achieve faster charging speed, secondary batteries typically adopt a center-tab structure (that is, a tab is welded to a middle region of an active material layer of an electrode plate), and a first protection adhesive is disposed on the surface of the active material layer to cover the welding burrs in a welding region to prevent a short circuit caused by the phenomenon that the welding burrs pierce the separator and contact an electrode plate of an opposite polarity on the opposite side. To improve the protection effect, another common practice in the prior art is to dispose a second protection adhesive on the surface of an active material layer of the electrode plate of an opposite polarity on the opposite side to prevent a short circuit caused by the phenomenon that the welding burrs pierce the first protection adhesive and the separator and then contact the active material layer of the electrode plate of an opposite polarity.

However, for the center-tab structure of a positive electrode plate, the lithium ions in the positive active material covered by the first protection adhesive still bypass the first protection adhesive and move to a negative electrode plate on the opposite side under the action of electric potential during charging. Because the second protection adhesive covers a part of the negative active material, a local position of the negative electrode plate is unable to absorb the excess lithium ions, resulting in excessive lithium ion concentration at the local position of the negative electrode plate. The excess lithium ions accumulate in a negative active material layer close to the edge of the second protection adhesive, thereby causing lithium plating.

Therefore, the above problem needs to be solved.

### SUMMARY

An objective of this application is to provide a secondary battery and an electronic device to alleviate the lithium plating of a negative electrode plate in a case of a center-tab structure of a positive electrode plate.

According to a first aspect of this application, a secondary battery is provided, including a negative electrode plate, a positive electrode plate, and a separator. The separator is disposed between the negative electrode plate and the positive electrode plate that are adjacent to each other. The positive electrode plate includes a positive current collector, a first positive active material layer, and a positive tab. Along a thickness direction of the positive current collector, a surface of the positive current collector is provided with the first positive active material layer. The first positive active material layer is provided with a first groove. The positive tab is disposed in the first groove and is electrically connected to the positive current collector. A first positive electrode insulation layer is disposed on a surface of the first positive active material layer facing the negative electrode plate. The first positive electrode insulation layer covers the first groove. A first negative electrode insulation layer is disposed on a surface of the negative electrode plate facing the first positive active material layer. Along a direction perpendicular to a surface of the first negative electrode insulation layer, a projection of the first negative electrode insulation layer on the first positive active material layer covers the first groove. Along a width direction of the first groove, a first hole is provided on one side of the first negative electrode insulation layer.

In the above technical solution, the positive tab is disposed in the first groove created on the first positive active material layer, so as to form a center-tab structure of the positive electrode plate to achieve a faster charging speed. The first positive electrode insulation layer covering the first groove is disposed on the surface of the first positive active material layer facing the negative electrode plate, so as to cover the welding burrs of the positive tab and the positive current collector exposed by the first groove. This reduces the probability that the welding burrs of the positive tab pierce the separator and contact the negative electrode plate, and reduces the probability of contact between the positive current collector exposed by the first groove and the negative electrode plate. The first negative electrode insulation layer with a projection covering the first groove is disposed on the surface of the negative electrode plate facing the first positive active material layer, thereby further reducing the probability that the welding burrs pierce the separator and then contact the negative electrode plate. By creating a first hole on one side of the first negative electrode insulation layer, this application enables the lithium ions on one side of the first negative electrode insulation layer to be absorbed by the negative electrode plate through the first hole, thereby reducing the probability of lithium plating caused by accumulation of excess lithium ions on the negative electrode plate on a side close to the first negative electrode insulation layer.

In some preferred embodiments, the first negative electrode insulation layer includes a first perforated portion and a first main portion. Along the width direction of the first groove, the first perforated portion is connected to one side of the first main portion. The first perforated portion is provided with the first hole. Along a direction perpendicular to the surface of the first negative electrode insulation layer, a projection of the first main portion on the first positive active material layer covers the first groove. By defining that the projection of the first main portion not provided with the first hole on the first positive active material layer covers the first groove, this application enables the first main portion to block the first groove, and consequently to block the welding burrs of the positive tab, thereby reducing the probability that the welding burrs pierce the separator and then contact the negative electrode plate.

In some preferred embodiments, along the width direction of the first groove, a width of the first main portion is greater than a width of the first groove by 0.5 mm to 6 mm. By defining that the width by which the first main portion exceeds the first groove is not less than 0.5 mm and not greater than 6 mm, this application endows the first negative electrode insulation layer with a sufficient bonding force to adhere to the negative electrode plate. In this way, the first main portion can cover the first groove without being excessively wide, thereby avoiding excessive reduction in the energy density of the secondary battery.

In some preferred embodiments, the first negative electrode insulation layer satisfies at least one of the following characteristics: (1) a ratio of an area of the first perforated portion to an area of the first main portion is 0.01 : 1 to 0.5 : 1, thereby alleviating the lithium plating caused by the accumulation of excess lithium ions on the negative electrode on a side close to the first negative electrode insulation layer, and at the same time, avoiding an excessively large area of the first perforated portion, and consequently alleviating the problem that the first perforated portion with a relatively large area affects the bonding force of the first main portion to the negative electrode plate; (2) a minimum diameter of a circumcircle of a contour of the first hole is 0.2 mm to 1.0 mm, so that lithium ions can be well absorbed by the negative electrode plate through the first hole; (3) the first perforated portion is provided with a plurality of first holes, and a spacing between two adjacent first holes is 0.2 mm to 0.5 mm, so that lithium ions can be evenly absorbed by the negative electrode plate through the first holes, thereby more effectively preventing lithium plating at a local position; (4) along the width direction of the first groove, a distance between a first hole close to the edge of the first perforated portion and the edge of the first perforated portion is 0.2 mm to 0.5 mm, so as to reduce the probability of lithium plating at the edge of the first perforated portion in the width direction of the first groove, and more effectively prevent lithium plating at a local position; (5) along the length direction of the first groove, a distance between a first hole close to the edge of the first perforated portion and the edge of the first perforated portion is 0.2 mm to 0.5 mm, so as to reduce the probability of lithium plating at the edge of the first perforated portion in the length direction of the first groove, and more effectively prevent lithium plating at a local position; and (6) a shape of the first hole is at least one of a circle, an ellipse, or a polygon.

In some preferred embodiments, the first negative electrode insulation layer includes a second perforated portion. Along the width direction of the first groove, the second perforated portion is connected to another side of the first main portion facing away from the first perforated portion. The second perforated portion is provided with a second hole. By disposing perforated portions on both sides of the first groove in the width direction, this application further reduces the probability of lithium plating on the other side of the first negative electrode insulation layer in the width direction of the first groove.

In some preferred embodiments, the first negative electrode insulation layer satisfies at least one of the following characteristics: (7) a ratio of an area of the second perforated portion to an area of the first main portion is 0.01 : 1 to 0.5 : 1, thereby alleviating the lithium plating caused by the accumulation of excess lithium ions on the negative electrode on the other side close to the first negative electrode insulation layer, and at the same time, avoiding an excessively large area of the second perforated portion, and consequently alleviating the problem that the second perforated portion with a relatively large area affects the bonding force of the first main portion to the negative electrode plate; (8) a minimum diameter of a circumcircle of a contour of the second hole is 0.2 mm to 1.0 mm, so that lithium ions can be well absorbed by the negative electrode plate through the second hole; (9) the second perforated portion is provided with a plurality of second holes, and a spacing between two adjacent second holes is 0.2 mm to 0.5 mm, so that lithium ions can be evenly absorbed by the negative electrode plate through the second holes, thereby more effectively preventing lithium plating at a local position; (10) along the width direction of the first groove, a distance between a second hole close to the edge of the second perforated portion and the edge of the second perforated portion is 0.2 mm to 0.5 mm, so as to reduce the probability of lithium plating at the edge of the second perforated portion in the width direction of the first groove, and more effectively prevent lithium plating at a local position; (11) along the length direction of the first groove, a distance between a second hole close to the edge of the second perforated portion and the edge of the second perforated portion is 0.2 mm to 0.5 mm, so as to reduce the probability of lithium plating at the edge of the second perforated portion in the length direction of the first groove, and more effectively prevent lithium plating at a local position; and (12) a shape of the second hole is at least one of a circle, an ellipse, or a polygon.

In some preferred embodiments, the first negative electrode insulation layer includes a third perforated portion. Along a length direction of the first groove, the third perforated portion is connected to one side of the first main portion close to the bottom of the first groove. The third perforated portion is provided with a third hole. By connecting one side of the first main portion close to the bottom of the first groove to the third perforated portion provided with the third hole, this application reduces the probability of lithium plating of the first negative electrode insulation layer on one side close to the bottom of the first groove.

In some preferred embodiments, the first negative electrode insulation layer satisfies at least one of the following characteristics: (13) a ratio of an area of the third perforated portion to an area of the first main portion is 0.001 : 1 to 0.2 : 1, thereby alleviating the lithium plating of the first negative electrode insulation layer on one side close to the bottom of the first groove, and at the same time, avoiding an excessively large area of the third perforated portion, and consequently alleviating the problem that the third perforated portion with a relatively large area affects the bonding force of the first main portion to the negative electrode plate; (14) a minimum diameter of a circumcircle of a contour of the third hole is 0.2 mm to 1.0 mm, so that lithium ions can be well absorbed by the negative electrode plate through the third hole; (15) the third perforated portion is provided with a plurality of third holes, and a spacing between two adjacent third holes is 0.2 mm to 0.5 mm, so that lithium ions can be evenly absorbed by the negative electrode plate through the third holes, thereby more effectively preventing lithium plating at a local position; (16) along the length direction of the first groove, a distance between a third hole close to the edge of the third perforated portion and the edge of the third perforated portion is 0.2 mm to 0.5 mm, so as to reduce the probability of lithium plating at the edge of the third perforated portion in the length direction of the first groove, and more effectively prevent lithium plating at a local position; (17) along the width direction of the first groove, a distance between a third hole close to the edge of the third perforated portion and the edge of the third perforated portion is 0.2 mm to 0.5 mm, so as to reduce the probability of lithium plating at the edge of the third perforated portion in the width direction of the first groove, and more effectively prevent lithium plating at a local position; and (18) a shape of the third hole is at least one of a circle, an ellipse, or a polygon.

In some preferred embodiments, along the width direction of the first groove, a width of the first negative electrode insulation layer is less than a width of the first positive electrode insulation layer. In this way, the first positive electrode insulation layer with a relatively large width can block more positive active materials, thereby reducing the amount of the positive active materials that can participate in the electrochemical reaction, and consequently reducing the probability of lithium plating of the negative electrode plate.

In some preferred embodiments, the first positive electrode insulation layer includes a fourth perforated portion and a second main portion. Along the width direction of the first groove, the fourth perforated portion is connected to one side of the second main portion. The fourth perforated portion is provided with a fourth hole. Along a direction perpendicular to a surface of the first positive electrode insulation layer, the fourth perforated portion at least partially overlaps the first positive active material layer. By connecting one side of the second main portion to the fourth perforated portion provided with the fourth hole, this application enables the positive active material covered by the first positive electrode insulation layer to release lithium ions through the fourth hole, thereby reducing the probability that the lithium ions in the positive active material covered by the first positive electrode insulation layer bypass the first positive electrode insulation layer and move to the negative electrode plate on the opposite side. This reduces the probability of lithium plating caused by an excessive lithium ion concentration at a local position of the negative electrode plate, and improves the utilization rate of the positive active material of the positive electrode plate, thereby increasing the energy density.

In some preferred embodiments, along the direction perpendicular to the surface of the first positive electrode insulation layer, the second main portion covers the first groove, thereby causing the second main portion to block the welding burrs of the positive tab, and consequently reducing the probability that the welding burrs pierce the separator and then contact the negative electrode plate. Along the width direction of the first groove, a width of the second main portion is greater than a width of the first groove by 0.5 mm to 6 mm. In this way, the second main portion is enabled to block the first groove but without being excessively wide, thereby alleviating the reduction in the energy density of the secondary battery.

In some preferred embodiments, the first positive electrode insulation layer satisfies at least one of the following characteristics: (19) a ratio of an area of the fourth perforated portion to an area of the second main portion is 0.01 : 1 to 0.5 : 1, so as to reduce the probability of lithium plating due to an excessive lithium ion concentration at a local position of the negative electrode plate while avoiding an excessively large area of the fourth perforated portion, and in turn, alleviate the reduction in the energy density of the secondary battery caused by the fourth perforated portion with a relatively large area; (20) a minimum diameter of a circumcircle of a contour of the fourth hole is 0.2 mm to 1.0 mm, so that the positive active material blocked by the first positive electrode insulation layer can favorably release lithium ions through the fourth hole; (21) the fourth perforated portion is provided with a plurality of fourth holes, and a spacing between two adjacent fourth holes is 0.2 mm to 0.5 mm, so that the positive active material blocked by the first positive electrode insulation layer can evenly release lithium ions through the fourth holes, thereby more effectively preventing lithium plating at a local position; (22) along the width direction of the first groove, a distance between a fourth hole close to the edge of the fourth perforated portion and the edge of the fourth perforated portion is 0.2 mm to 0.5 mm, so as to reduce the probability that the lithium ions of the positive active material blocked by the first positive electrode insulation layer are released by bypassing the edge of the fourth perforated portion in the width direction of the first groove, and to more effectively prevent lithium plating at a local position; (23) along the length direction of the first groove, a distance between a fourth hole close to the edge of the fourth perforated portion and the edge of the fourth perforated portion is 0.2 mm to 0.5 mm, so as to reduce the probability that the lithium ions of the positive active material blocked by the first positive electrode insulation layer are released by bypassing the edge of the fourth perforated portion in the length direction of the first groove, and to more effectively prevent lithium plating at a local position; and (24) a shape of the fourth hole is at least one of a circle, an ellipse, or a polygon.

In some preferred embodiments, the first positive electrode insulation layer includes a fifth perforated portion. Along the width direction of the first groove, the fifth perforated portion is connected to one side of the second main portion facing away from the fourth perforated portion. The fifth perforated portion is provided with a fifth hole. By connecting the other side of the second main portion along the width direction of the first groove to the fifth perforated portion provided with the fifth hole, this application enables the positive active material covered by the first positive electrode insulation layer to release lithium ions through the fifth hole, thereby reducing the probability that the lithium ions in the positive active material covered by the first positive electrode insulation layer bypass the first positive electrode insulation layer and move to the negative electrode plate on the opposite side. This reduces the probability of lithium plating caused by an excessive lithium ion concentration at a local position of the negative electrode plate, and improves the utilization rate of the positive active material of the positive electrode plate, thereby increasing the energy density.

In some preferred embodiments, the first positive electrode insulation layer satisfies at least one of the following characteristics: (25) a ratio of an area of the fifth perforated portion to an area of the second main portion is 0.01 : 1 to 0.5 : 1, so as to reduce the probability of lithium plating due to an excessive lithium ion concentration at a local position of the negative electrode plate while avoiding an excessively large area of the fifth perforated portion, and in turn, alleviate the reduction in the energy density of the secondary battery caused by the fifth perforated portion with a relatively large area; (26) a minimum diameter of a circumcircle of a contour of the fifth hole is 0.2 mm to 1.0 mm, so that the positive active material blocked by the first positive electrode insulation layer can favorably release lithium ions through the fifth hole; (27) the fifth perforated portion is provided with a plurality of fifth holes, and a spacing between two adjacent fifth holes is 0.2 mm to 0.5 mm, so that the positive active material blocked by the first positive electrode insulation layer can evenly release lithium ions through the fifth holes, thereby more effectively preventing lithium plating at a local position; (28) along the width direction of the first groove, a distance between a fifth hole close to the edge of the fifth perforated portion and the edge of the fifth perforated portion is 0.2 mm to 0.5 mm, so as to reduce the probability that the lithium ions of the positive active material blocked by the first positive electrode insulation layer are released by bypassing the edge of the fifth perforated portion in the width direction of the first groove, and to more effectively prevent lithium plating at a local position; (29) along the length direction of the first groove, a distance between a fifth hole close to the edge of the fifth perforated portion and the edge of the fifth perforated portion is 0.2 mm to 0.5 mm, so as to reduce the probability that the lithium ions of the positive active material blocked by the first positive electrode insulation layer are released by bypassing the edge of the fifth perforated portion in the length direction of the first groove, and to more effectively prevent lithium plating at a local position; and (30) a shape of the fifth hole is at least one of a circle, an ellipse, or a polygon.

In some preferred embodiments, the first positive electrode insulation layer includes a sixth perforated portion. Along a length direction of the first groove, the sixth perforated portion is connected to one side of the second main portion close to the bottom of the first groove. The sixth perforated portion is provided with a sixth hole. By connecting one side of the second main portion close to the bottom of the first groove to the sixth perforated portion provided with the sixth hole, this application enables the positive active material covered by the first positive electrode insulation layer to release lithium ions through the sixth hole, thereby reducing the probability that the lithium ions in the positive active material covered by the first positive electrode insulation layer bypass the first positive electrode insulation layer and move to the negative electrode plate on the opposite side. This reduces the probability of lithium plating caused by an excessive lithium ion concentration at a local position of the negative electrode plate, and improves the utilization rate of the positive active material of the positive electrode plate, thereby increasing the energy density.

In some preferred embodiments, the first positive electrode insulation layer satisfies at least one of the following characteristics: (31) a ratio of an area of the sixth perforated portion to an area of the second main portion is 0.001 : 1 to 0.2 : 1, so as to reduce the probability of lithium plating due to an excessive lithium ion concentration at a local position of the negative electrode plate while avoiding an excessively large area of the sixth perforated portion, and in turn, alleviate the reduction in the energy density of the secondary battery caused by the sixth perforated portion with a relatively large area; (32) a minimum diameter of a circumcircle of a contour of the sixth hole is 0.2 mm to 1.0 mm, so that the positive active material blocked by the first positive electrode insulation layer can favorably release lithium ions through the sixth hole; (33) the sixth perforated portion is provided with a plurality of sixth holes, and a spacing between two adjacent sixth holes is 0.2 mm to 0.5 mm, so that the positive active material blocked by the first positive electrode insulation layer can evenly release lithium ions through the sixth holes, thereby more effectively preventing lithium plating at a local position; (34) along the length direction of the first groove, a distance between a sixth hole close to the edge of the sixth perforated portion and the edge of the sixth perforated portion is 0.2 mm to 0.5 mm, so as to reduce the probability that the lithium ions of the positive active material blocked by the first positive electrode insulation layer are released by bypassing the edge of the sixth perforated portion in the length direction of the first groove, and to more effectively prevent lithium plating at a local position; (35) along the width direction of the first groove, a distance between a sixth hole close to the edge of the sixth perforated portion and the edge of the sixth perforated portion is 0.2 mm to 0.5 mm, so as to reduce the probability that the lithium ions of the positive active material blocked by the first positive electrode insulation layer are released by bypassing the edge of the sixth perforated portion in the width direction of the first groove, and to more effectively prevent lithium plating at a local position; and (36) a shape of the sixth hole is at least one of a circle, an ellipse, or a polygon.

In some preferred embodiments, the positive electrode plate includes a second positive active material layer. Along the thickness direction of the positive current collector, a surface of the positive current collector facing away from the first positive active material layer is provided with the second positive active material layer. The second positive active material layer is provided with a second groove. The second groove is configured to provide a receiving space for a device for welding the positive tab. The surface of the second positive active material layer facing the negative electrode plate is provided with a second positive electrode insulation layer. The second positive electrode insulation layer covers the second groove, thereby reducing the probability of contact between the positive current collector exposed by the second groove and the negative electrode plate. A surface of the negative electrode plate facing the second positive active material layer is provided with a second negative electrode insulation layer. Along a direction perpendicular to a surface of the second negative electrode insulation layer, a projection of the second negative electrode insulation layer on the second positive active material layer covers the second groove, thereby reducing the probability that the metal burrs of the positive current collector pierce the separator and then contact the negative electrode plate. Along the width direction of the first groove, a seventh hole is provided on one side of the second negative electrode insulation layer to reduce the probability of lithium plating of the negative electrode plate on one side of the second negative electrode insulation layer.

In some preferred embodiments, the secondary battery satisfies at least one of the following characteristics: (37) a thickness of the first positive electrode insulation layer is H₁, satisfying: 4 µm ≤ H₁ ≤ 30 µm, so that the first positive electrode insulation layer is highly resistant to puncture while being not excessively thick, thereby alleviating the reduction in the energy density of the secondary battery; (38) a thickness of the first negative electrode insulation layer is H₂, satisfying: 4 µm ≤ H₂ ≤ 30 µm, so that the first negative electrode insulation layer is highly resistant to puncture while being not excessively thick, thereby alleviating the reduction in the energy density of the secondary battery; (39) the first positive electrode insulation layer includes at least one of polystyrene, modified polystyrene, poly(styrene-co-isoprene-co-styrene), polyolefin, polyethylene terephthalate, or polyimide, so as to endow the first positive electrode insulation layer with good insulation performance; and (40) the first negative electrode insulation layer includes at least one of polystyrene, modified polystyrene, poly(styrene-co-isoprene-co-styrene), polyolefin, polyethylene terephthalate, or polyimide, so as to endow the first negative electrode insulation layer with good insulation performance.

According to a second aspect, this application further provides an electronic device, including the secondary battery disclosed in any one of the embodiments in the first aspect described above.

In this application, in the center-tab structure, a protection adhesive is disposed on both the surface of the positive active material layer and the surface of the negative electrode plate on the opposite side, thereby more significantly reducing the risk of a short circuit caused by the phenomenon that the welding burrs of the tab pierce the separator and contact the electrode plate of an opposite polarity on the opposite side. However, for the center-tab structure of the positive electrode plate, lithium plating may occur at the edge of the protection adhesive on the surface of the negative electrode plate during charging. By creating holes in the protection adhesive on the surface of the negative electrode plate, this application enables the lithium ions close to the protection adhesive on the surface of the negative electrode plate to be absorbed by the negative electrode plate through the holes, thereby alleviating the lithium plating at the edge of the protection adhesive on the surface of the negative electrode plate.

Additional aspects and advantages of some embodiments of this application will be partly described or illustrated herein later or expounded through implementation of an embodiment of this application.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the dimensions in the drawings do not constitute any scale limitation.
FIG. 1 is a schematic structural diagram of a secondary battery according to some embodiments of this application;
FIG. 2 is a schematic structural diagram of an electrode assembly according to some embodiments of this application;
FIG. 3 is a close-up view of a part A shown in FIG. 2;
FIG. 4 is a schematic structural diagram of a first negative electrode insulation layer according to some embodiments of this application;
FIG. 5 is a schematic structural diagram of a negative electrode plate viewed along a direction perpendicular to a surface of a first negative electrode insulation layer according to some embodiments of this application;
FIG. 6 is a schematic structural diagram of a first positive electrode insulation layer according to some embodiments of this application;
FIG. 7 is a schematic structural diagram of a positive electrode plate viewed along a direction perpendicular to a surface of a first positive electrode insulation layer according to some embodiments of this application;
FIG. 8 is a schematic structural diagram of an electrode assembly according to some embodiments of this application;
FIG. 9 is a close-up view of a part B shown in FIG. 8;
FIG. 10 is a schematic structural diagram of a second negative electrode insulation layer according to some embodiments of this application;
FIG. 11 is a schematic structural diagram of a negative electrode plate viewed along a direction perpendicular to a surface of a second negative electrode insulation layer according to some embodiments of this application;
FIG. 12 is a schematic structural diagram of a second positive electrode insulation layer according to some embodiments of this application; and
FIG. 13 is a schematic structural diagram of a positive electrode plate viewed along a direction perpendicular to a surface of a second positive electrode insulation layer according to some embodiments of this application.

List of reference signs:
100. secondary battery; X. first direction; Y. second direction;
10. housing;
20. electrode assembly;
21. positive electrode plate; 211. positive current collector; 212. first positive active material layer; 2121. first groove; 213. positive tab; 214. second positive active material layer; 2141. second groove;
22. negative electrode plate; 221. negative current collector; 222. first negative active material layer; 223. second negative active material layer;
23. separator;
24. first positive electrode insulation layer; 241. second main portion; 242. fourth perforated portion; 2421. fourth hole; 243. fifth perforated portion; 2431. fifth hole; 244. sixth perforated portion; 2441. sixth hole;
25. first negative electrode insulation layer; 251. first main portion; 252. first perforated portion; 2521. first hole; 253. second perforated portion; 2531. second hole; 254. third perforated portion; 2541. third hole;
26. second positive electrode insulation layer; 261. fourth main portion; 262. tenth perforated portion; 2621. tenth hole; 263. eleventh perforated portion; 2631. eleventh hole; 264. twelfth perforated portion; 2641. twelfth hole;
27. second negative electrode insulation layer; 271. third main portion; 272. seventh perforated portion; 2721. seventh hole; 273. eighth perforated portion; 2731. eighth hole; 274. ninth perforated portion; 2741. ninth hole

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

To the extent that no mutual conflict occurs, the technical features described below in different embodiments of this application may be combined with each other.

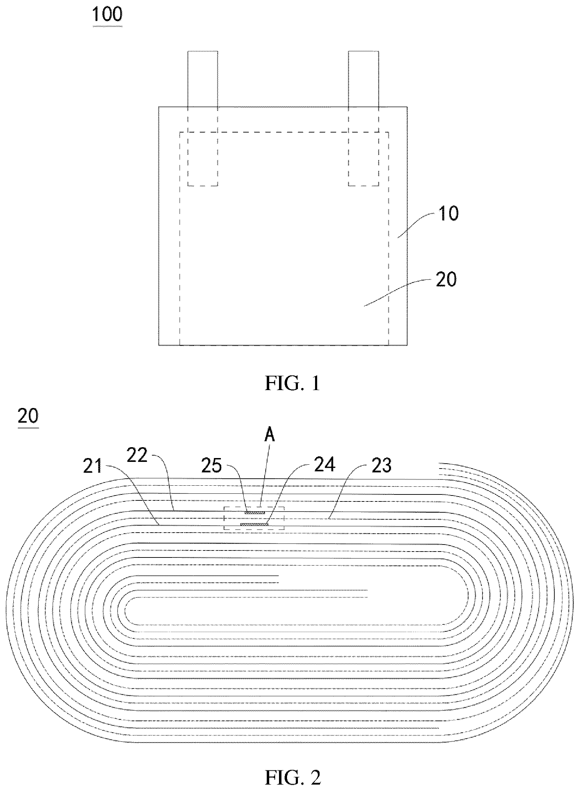

According to a first aspect, an embodiment of this application discloses a secondary battery 100. Referring to FIG. 1, the secondary battery 100 includes a housing 10 and an electrode assembly 20. The housing 10 can accommodate the electrode assembly 20 and an electrolyte solution (not shown in the figure). The electrolyte solution in the housing 10 infiltrates the electrode assembly 20.

For the electrode assembly 20, referring to FIG. 2, FIG. 2 shows a jelly-roll structure of the electrode assembly 20. The electrode assembly 20 includes a positive electrode plate 21, a separator 23, and a negative electrode plate 22. A separator 23 is disposed between the negative electrode plate 22 and the positive electrode plate 21 that are adjacent to each other. The positive electrode plate 21, the separator 23, and the negative electrode plate 22 are stacked and wound. As an example, along the thickness direction of the positive electrode plate 21 and/or the negative electrode plate 22, the positive electrode plate 21, the separator 23, and the negative electrode plate 22 are stacked sequentially and then wound to form a jelly-roll electrode assembly 20. In an embodiment of this application, a jelly-roll electrode assembly 20 is described as an example. In other embodiments, the electrode assembly 20 may be a stacked structure instead. For example, along the thickness direction of the positive electrode plate 21 and/or the negative electrode plate 22, the positive electrode plate 21, the separator 23, and the negative electrode plate 22 are stacked sequentially to form a stacked-type electrode assembly 20.

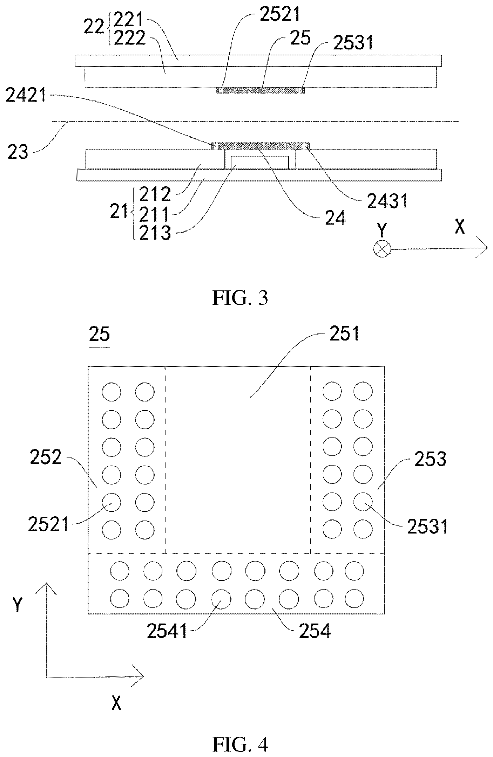

For the positive electrode plate 21, referring to FIG. 3, the positive electrode plate 21 includes a positive current collector 211, a first positive active material layer 212, and a positive tab 213. Along a thickness direction of the positive current collector 211, a surface of the positive current collector 211 is provided with the first positive active material layer 212. The first positive active material layer 212 is provided with a first groove 2121. The positive tab 213 is disposed in the first groove 2121 and is electrically connected to the positive current collector 211 to form a center-tab structure, thereby endowing the secondary battery 100 with a faster charging speed.

Regarding the positive current collector 211, the positive current collector 211 may be a composite current collector (a metal-polymer-metal composite structure). For example, the positive current collector 211 includes a polymer layer and metal layers that are disposed on two opposite surfaces of the polymer layer respectively. The polymer layer serves as a main mechanical support layer of the positive current collector 211, and may include at least one of polypropylene (PP), polyethylene terephthalate (PET), polybutylene terephthalate (PBT), polystyrene (PS), or polyethylene (PE). The metal layer may include at least one of aluminum, copper, nickel, titanium, or silver. The positive current collector 211 uses the polymer layer as a main mechanical support layer, so that the thickness of the metal layer can be reduced, thereby reducing the metal burrs caused when the secondary battery 100 is mechanically damaged, reducing the mass of the positive current collector 211, and consequently increasing the gravimetric energy density of the secondary battery 100. In some other embodiments, the positive current collector 211 may be single-layer metal foil. The single-layer metal foil may include at least one of aluminum, copper, nickel, titanium, or silver.

Regarding the first positive active material layer 212, the first positive active material layer 212 is infiltrated by an electrolyte solution in the housing 10 to undergo electrochemical reactions. The first positive active material layer 212 includes a first positive active material, a conductive agent, a binder, and the like. The above materials are mixed and stirred well and applied onto one surface of the positive current collector 211 to form the first positive active material layer 212. The first positive active material may include at least one of lithium nickel cobalt manganese oxide, lithium cobalt oxide, lithium iron phosphate, lithium nickel cobalt aluminum oxide, lithium manganese oxide, or lithium manganese iron phosphate.

In this application, the positive tab 213 is a metal conductor led out from the positive electrode plate 21. The positive tab 213 is configured to be connected to another part of the secondary battery 100 in series or in parallel. The material of the positive tab 213 is not particularly limited, as long as the objectives of this application can be achieved. For example, the material may be a material known in the art for use in a positive tab 213. The method for forming the first groove 2121 is not particularly limited herein, and may be a formation method known in the art, as long as the objectives of this application can be achieved. For example, the first groove may be formed by performing laser cleaning in a corresponding first positive active material layer 212 region; or the first groove 2121 may be obtained by affixing a foam adhesive onto the positive current collector 211 first, applying the first positive active material layer 212, and then performing drying and peeling off the foam adhesive.

Regarding the negative electrode plate 22, the negative electrode plate 22 includes a negative current collector 221 and a first negative active material layer 222. Along a thickness direction of the negative current collector 221, a surface of the negative current collector 221 facing the first positive active material layer 212 is provided with the first negative active material layer 222.

Regarding the negative current collector 221, the negative current collector 221 may be a composite current collector (a metal-polymer-metal composite structure). For example, the negative current collector 221 includes a polymer layer and metal layers that are disposed on two opposite surfaces of the polymer layer respectively. The polymer layer serves as a main mechanical support layer of the negative current collector 221, and may include at least one of polypropylene (PP), polyethylene terephthalate (PET), polybutylene terephthalate (PBT), polystyrene (PS), or polyethylene (PE). The metal layer may include at least one of aluminum, copper, nickel, titanium, or silver. The negative current collector 221 uses the polymer layer as a main mechanical support layer, so that the thickness of the metal layer can be reduced, thereby reducing the metal burrs generated when the secondary battery 100 is mechanically damaged, reducing the mass of the negative current collector 221, and consequently increasing the gravimetric energy density of the secondary battery 100. In other embodiments, the negative current collector 221 may be single-layer metal foil. The single-layer metal foil may include at least one of aluminum, copper, nickel, titanium, or silver.

Regarding the first negative active material layer 222, the first negative active material layer 222 is infiltrated by the electrolyte solution in the housing 10 to undergo electrochemical reactions. The first negative active material layer 222 includes a first negative active material, a conductive agent, a binder, and the like. The above materials are mixed and stirred well and applied onto one surface of the negative current collector 221 facing the first positive active material layer 212, so as to form the first negative active material layer 222. The first negative active material may include at least one of graphite, silicon, hard carbon, or carbon fiber.

In some embodiments, a surface of the first positive active material layer 212 facing the negative electrode plate 22 is provided with a first positive electrode insulation layer 24. The first positive electrode insulation layer 24 covers the first groove 2121 to cover up the welding burrs of the positive tab 213 and the positive current collector 211 exposed by the first groove 2121. This reduces the probability that the welding burrs pierce the separator 23 and contact the negative electrode plate 22, and reduces the probability of contact between the positive current collector 211 exposed by the first groove 2121 and the negative electrode plate 22. A surface of the first negative active material layer 222 facing the first positive active material layer 212 is provided with a first negative electrode insulation layer 25. Along a direction perpendicular to the surface of the first negative electrode insulation layer 25, a projection of the first negative electrode insulation layer 25 on the first positive active material layer 212 covers the first groove 2121, thereby further reducing the probability that the welding burrs pierce the separator 23 and then contact the negative electrode plate 22. However, during charging of the secondary battery 100, lithium ions in the first positive active material covered by the first positive electrode insulation layer 24 bypass the first positive electrode insulation layer 24 and move to the first negative active material layer 222 of the negative electrode plate 22 on the opposite side under the action of the electric potential. Consequently, the lithium ion concentration is excessively high at a local position of the first negative active material layer 222. Because the first negative electrode insulation layer 25 covers up a part of the negative active material, the excess lithium ions are unable to be absorbed at the local position of the first negative active material layer 222. The excess lithium ions accumulate on the negative active material layer close to the edge of the first negative electrode insulation layer 25, giving rise to lithium plating.

To alleviate the above problem, in an embodiment of this application, referring to FIG. 3, FIG. 4, and FIG. 5, along the width direction (first direction X) of the first groove 2121, one side of the first negative electrode insulation layer 25 is provided with a first hole 2521, thereby enabling the lithium ions on one side of the first negative electrode insulation layer 25 to be absorbed by the first negative active material layer 222 through the first hole 2521, and consequently reducing the probability of lithium plating caused by accumulation of excess lithium ions on the first negative active material layer 222 on a side close to the first negative electrode insulation layer 25.

Regarding the first negative electrode insulation layer 25, the first negative electrode insulation layer 25 includes a first perforated portion 252 and a first main portion 251. Along the width direction of the first groove 2121, the first perforated portion 252 is connected to one side of the first main portion 251. The first perforated portion 252 is provided with the first hole 2521. Along a direction perpendicular to the surface of the first negative electrode insulation layer 25, a projection of the first main portion 251 on the first positive active material layer 212 covers the first groove 2121, thereby causing the first main portion 251 to block the first groove 2121, and consequently to block the welding burrs of the positive tab 213, and in turn, reducing the probability that the welding burrs pierce the separator 23 and then contact the negative electrode plate 22.

Preferably, along the width direction of the first groove 2121, the width of the first main portion 251 is greater than the width of the first groove 2121 by 0.5 mm to 6 mm. By defining that the width by which the first main portion 251 exceeds the first groove 2121 is not less than 0.5 mm and not greater than 6 mm, this application enables the first main portion 251 to cover up the first groove 2121 without causing the first main portion 251 to be excessively wide, thereby avoiding excessive reduction in the energy density of the secondary battery 100. Along the length direction of the first groove 2121, the width of the first main portion 251 is greater than the length of the first groove 2121 by 0.1 mm to 4 mm, thereby enabling the first main portion 251 to block the first groove 2121 but without causing the first main portion 251 to be excessively long, and consequently alleviating the reduction in the energy density of the secondary battery 100.

In some embodiments, the first negative electrode insulation layer 25 satisfies at least one of the following characteristics: (1) A ratio of the area of the first perforated portion 252 to the area of the first main portion 251 is 0.01 : 1 to 0.5 : 1, thereby alleviating the lithium plating caused by the accumulation of excess lithium ions on the first negative active material layer 222 on the side close to the first negative electrode insulation layer 25, and at the same time, avoiding an excessively large area of the first perforated portion 252, and consequently alleviating the problem that the first perforated portion 252 with a relatively large area affects the bonding force of the first main portion 251 to the negative electrode plate 22. The shapes of the first perforated portion 252 and the first main portion 251 are preferably rectangular, and the lengths of the first perforated portion 252 and the first main portion 251 along the length direction (second direction Y) of the first groove 2121 are the same. Therefore, the ratio of the area of the first perforated portion 252 to the area of the first main portion 251 is equal to the ratio of the width of the first perforated portion 252 to the width of the first main portion 251 along the width direction of the first groove 2121. (2) A minimum diameter of a circumcircle of the contour of the first hole 2521 is 0.2 mm to 1.0 mm, so that lithium ions can be well absorbed by the negative electrode plate 22 through the first hole 2521. (3) The first perforated portion 252 is provided with a plurality of first holes 2521. A spacing between two adjacent first holes 2521 is 0.2 mm to 0.5 mm, so that lithium ions can be evenly absorbed by the negative electrode plate 22 through the first holes 2521. It is assumed that a spacing between two adjacent first holes 2521 is A1, a distance between the centers of circumcircles of the contours of the two adjacent first holes 2521 is B1, and the radii of the circumcircles of the contours of the first holes 2521 are R1, satisfying: A1 = B1 - 2 × R1. (4) Along the width direction of the first groove 2121, a distance between the first hole 2521 close to the edge of the first perforated portion 252 and the edge of the first perforated portion 252 is 0.2 mm to 0.5 mm, so as to reduce the probability of lithium plating at the edge of the first perforated portion 252 in the width direction of the first groove 2121. It is assumed that a distance between the first hole 2521 and the edge of the first perforated portion 252 along the width direction of the first groove 2121 is C1, and a distance between the center of the circumcircle of the contour of the first hole 2521 and the edge of the first perforated portion 252 along the width direction of the first groove 2121 is D1, satisfying: C1 = D1 - R1. (5) Along the length direction of the first groove 2121, a distance between the first hole 2521 close to the edge of the first perforated portion 252 and the edge of the first perforated portion 252 is 0.2 mm to 0.5 mm, so as to reduce the probability of lithium plating at the edge of the first perforated portion 252 in the length direction of the first groove 2121. It is assumed that a distance between the first hole 2521 and the edge of the first perforated portion 252 along the length direction of the first groove 2121 is E1, and a distance between the center of the circumcircle of the contour of the first hole 2521 and the edge of the first perforated portion 252 along the length direction of the first groove 2121 is F1, satisfying: E1= F1 - R1. (6) The shape of the first hole 2521 is at least one of a circle, an ellipse, or a polygon.

In some embodiments, the first negative electrode insulation layer 25 includes a second perforated portion 253. Along the width direction of the first groove 2121, the second perforated portion 253 is connected to another side of the first main portion 251 facing away from the first perforated portion 252 (in other words, the first perforated portion 252 and the second perforated portion 253 are disposed on two sides of the first main portion 251 respectively in the width direction of the first groove 2121). The second perforated portion 253 is provided with a second hole 2531. By connecting the other side of the first main portion 251 facing away from the first perforated portion 252 to the second perforated portion 253 provided with the second hole 2531, this application reduces the probability of lithium plating of the first negative electrode insulation layer 25 on the other side in the width direction of the first groove 2121.

In some embodiments, the first negative electrode insulation layer 25 satisfies at least one of the following characteristics: (7) A ratio of the area of the second perforated portion 253 to the area of the first main portion 251 is 0.01 : 1 to 0.5 : 1, thereby alleviating the lithium plating caused by the accumulation of excess lithium ions on the negative electrode plate 22 on the other side close to the first negative electrode insulation layer 25, and at the same time, avoiding an excessively large area of the second perforated portion 253, and consequently alleviating the problem that the second perforated portion 253 with a relatively large area affects the bonding force of the first main portion 251 to the negative electrode plate 22. The shapes of the second perforated portion 253 and the first main portion 251 are preferably rectangular, and the lengths of the second perforated portion 253 and the first main portion 251 along the length direction of the first groove 2121 are the same. Therefore, the ratio of the area of the second perforated portion 253 to the area of the first main portion 251 is equal to the ratio of the width of the second perforated portion 253 to the width of the first main portion 251 along the width direction of the first groove 2121. (8) A minimum diameter of the circumcircle of the contour of the second hole 2531 is 0.2 mm to 1.0 mm, so that lithium ions can be well absorbed by the negative electrode plate 22 through the second hole 2531. (9) The second perforated portion 253 is provided with a plurality of second holes 2531. A spacing between two adjacent second holes 2531 is 0.2 mm to 0.5 mm, so that lithium ions can be evenly absorbed by the negative electrode plate 22 through the second holes 2531. It is assumed that a spacing between two adjacent second holes 2531 is A2, a distance between centers of circumcircles of the contours of the two adjacent second holes 2531 is B2, and the radii of the circumcircles of the contours of the second holes 2531 are R2, satisfying: A2 = B2 - 2 × R2. (10) Along the width direction of the first groove 2121, a distance between the second hole 2531 close to the edge of the second perforated portion 253 and the edge of the second perforated portion 253 is 0.2 mm to 0.5 mm, so as to reduce the probability of lithium plating at the edge of the second perforated portion 253 in the width direction of the first groove 2121. It is assumed that a distance between the second hole 2531 and the edge of the second perforated portion 253 along the width direction of the first groove 2121 is C2, and a distance between the center of the circumcircle of the contour of the second hole 2531 and the edge of the second perforated portion 253 along the width direction of the first groove 2121 is D2, satisfying: C2 = D2 - R2. (11) Along the length direction of the first groove 2121, a distance between the second hole 2531 close to the edge of the second perforated portion 253 and the edge of the second perforated portion 253 is 0.2 mm to 0.5 mm, so as to reduce the probability of lithium plating at the edge of the second perforated portion 253 in the length direction of the first groove 2121. It is assumed that a distance between the second hole 2531 and the edge of the second perforated portion 253 along the length direction of the first groove 2121 is E2, and a distance between the center of the circumcircle of the contour of the second hole 2531 and the edge of the second perforated portion 253 along the length direction of the first groove 2121 is F2, satisfying: E2 = F2 - R2. (12) The shape of the second hole 2531 is at least one of a circle, an ellipse, or a polygon.

**In** some preferred embodiments, the first negative electrode insulation layer 25 includes a third perforated portion 254. Along the length direction of the first groove 2121, the third perforated portion 254 is connected to one side of the first main portion 251 close to the bottom of the first groove 2121. The third perforated portion 254 is provided with a third hole 2541. By connecting one side of the first main portion 251 close to the bottom of the first groove 2121 to the third perforated portion 254 provided with the third hole 2541, this application reduces the probability of lithium plating of the first negative electrode insulation layer 25 on one side close to the bottom of the first groove 2121. In this application, the boundaries of the regions in the first main portion 251, the first perforated portion 252, the second perforated portion 253, and the third perforated portion 254 are indicated by the dashed lines shown in FIG. 4.

**In** some embodiments, the first negative electrode insulation layer 25 satisfies at least one of the following characteristics: (13) A ratio of the area of the third perforated portion 254 to the area of the first main portion 251 is 0.001 : 1 to 0.2 : 1, thereby alleviating the lithium plating of the first negative electrode insulation layer 25 on one side close to the bottom of the first groove 2121, and at the same time, avoiding an excessively large area of the third perforated portion 254, and consequently alleviating the problem that the third perforated portion 254 with a relatively large area affects the bonding force of the first main portion 251 to the negative electrode plate 22. The shapes of the third perforated portion 254 and the first main portion 251 are preferably rectangular. Along the width direction of the first groove 2121, the width of the third perforated portion 254 is equal to a sum of the width of the first main portion 251, the width of the first perforated portion 252, and the width of the second perforated portion 253. Because both the width of the first perforated portion 252 and the width of the second perforated portion 253 are smaller than the width of the first main portion 251, the width of the first perforated portion 252 and the width of the second perforated portion 253 are ignorable. In other words, the width of the third perforated portion 254 is approximately equal to the width of the first main portion 251. Therefore, the ratio of the area of the third perforated portion 254 to the area of the first main portion 251 is approximately equal to the ratio of the length of the third perforated portion 254 to the length of the first main portion 251 along the length direction of the first groove 2121. (14) A minimum diameter of the circumcircle of the contour of the third hole 2541 is 0.2 mm to 1.0 mm, so that lithium ions can be well absorbed by the negative electrode plate 22 through the third hole 2541. (15) The third perforated portion 254 is provided with a plurality of third holes 2541. A spacing between two adjacent third holes 2541 is 0.2 mm to 0.5 mm, so that lithium ions can be evenly absorbed by the negative electrode plate 22 through the third holes 2541. It is assumed that a spacing between two adjacent third holes 2541 is A3, a distance between centers of circumcircles of the contours of the two adjacent third holes 2541 is B3, and the radii of the circumcircles of the contours of the third holes 2541 are R3, satisfying: A3 = B3 - 2 × R3. (16) Along the length direction of the first groove 2121, a distance between the third hole 2541 close to the edge of the third perforated portion 254 and the edge of the third perforated portion 254 is 0.2 mm to 0.5 mm, so as to reduce the probability of lithium plating at the edge of the third perforated portion 254 in the length direction of the first groove 2121. It is assumed that a distance between the third hole 2541 and the edge of the third perforated portion 254 along the length direction of the first groove 2121 is C3, and a distance between the center of the circumcircle of the contour of the third hole 2541 and the edge of the third perforated portion 254 along the length direction of the first groove 2121 is D3, satisfying: C3 = D3 - R3. (17) Along the width direction of the first groove 2121, a distance between the third hole 2541 close to the edge of the third perforated portion 254 and the edge of the third perforated portion 254 is 0.2 mm to 0.5 mm, so as to reduce the probability of lithium plating at the edge of the third perforated portion 254 in the width direction of the first groove 2121. It is assumed that a distance between the third hole 2541 and the edge of the third perforated portion 254 along the width direction of the first groove 2121 is E3, and a distance between the center of the circumcircle of the contour of the third hole 2541 and the edge of the third perforated portion 254 along the width direction of the first groove 2121 is F3, satisfying: E3 = F3 - R3. (18) The shape of the third hole 2541 is at least one of a circle, an ellipse, or a polygon.

In some embodiments, along the width direction of the first groove 2121, the width of the first negative electrode insulation layer 25 is less than the width of the first positive electrode insulation layer 24. In this way, the first positive electrode insulation layer 24 with a relatively large width can block more positive active materials, thereby reducing the amount of the positive active materials that can participate in the electrochemical reaction, and consequently reducing the probability of lithium plating of the negative electrode plate 22.

In some embodiments, referring to FIG. 3, FIG. 6, and FIG. 7, the first positive electrode insulation layer 24 includes a fourth perforated portion 242 and a second main portion 241. Along the width direction of the first groove 2121, the fourth perforated portion 242 is connected to one side of the second main portion 241. The fourth perforated portion 242 is provided with a fourth hole 2421. Along a direction perpendicular to the surface of the first positive electrode insulation layer 24, the fourth perforated portion 242 at least partially overlaps the first positive active material layer 212, thereby enabling the positive active material covered by the first positive electrode insulation layer 24 to release lithium ions through the fourth hole 2421, thereby reducing the probability that the lithium ions in the positive active material covered by the first positive electrode insulation layer 24 bypass the first positive electrode insulation layer 24 and move to the negative electrode plate 22 on the opposite side. This reduces the probability of lithium plating caused by an excessive lithium ion concentration at a local position of the negative electrode plate 22, and improves the utilization rate of the positive active material of the positive electrode plate 21, thereby increasing the energy density.

In some embodiments, along the direction perpendicular to the surface of the first positive electrode insulation layer 24, the second main portion 241 covers the first groove 2121, thereby causing the second main portion 241 to block the welding burrs of the positive tab 213, and consequently reducing the probability that the welding burrs pierce the separator 23 and then contact the negative electrode plate 22. Along the width direction of the first groove 2121, the width of the second main portion 241 is greater than the width of the first groove 2121 by 0.5 mm to 6 mm, thereby enabling the second main portion 241 to block the first groove 2121 but without causing the second main portion 241 to be excessively wide, and consequently alleviating the reduction in the energy density of the secondary battery 100. Along the length direction of the first groove 2121, the length of the second main portion 241 is greater than the length of the first groove 2121 by 0.1 mm to 4 mm, thereby enabling the second main portion 241 to block the first groove 2121 but without causing the second main portion 241 to be excessively long, and consequently alleviating the reduction in the energy density of the secondary battery 100.

In some embodiments, the first positive electrode insulation layer 24 satisfies at least one of the following characteristics: (19) A ratio of an area of the fourth perforated portion 242 to an area of the second main portion 241 is 0.01 : 1 to 0.5 : 1, so as to reduce the probability of lithium plating due to an excessive lithium ion concentration at a local position of the negative electrode plate 22 while avoiding an excessively large area of the fourth perforated portion 242, and in turn, alleviate the reduction in the energy density of the secondary battery 100 caused by the fourth perforated portion 242 with a relatively large area; The shapes of the fourth perforated portion 242 and the second main portion 241 are preferably rectangular, and the lengths of the fourth perforated portion 242 and the second main portion 241 along the length direction of the first groove 2121 are the same. Therefore, the ratio of the area of the fourth perforated portion 242 to the area of the second main portion 241 is equal to the ratio of the width of the fourth perforated portion 242 to the width of the second main portion 241 along the width direction of the first groove 2121. (20) A minimum diameter of a circumcircle of a contour of the fourth hole 2421 is 0.2 mm to 1.0 mm, so that the positive active material blocked by the first positive electrode insulation layer 24 can favorably release lithium ions through the fourth hole 2421. (21) The fourth perforated portion 242 is provided with a plurality of fourth holes 2421, and a spacing between two adjacent fourth holes 2421 is 0.2 mm to 0.5 mm, so that the positive active material blocked by the first positive electrode insulation layer 24 can evenly release lithium ions through the fourth holes 2421. It is assumed that a spacing between two adjacent fourth holes 2421 is A4, a distance between centers of circumcircles of the contours of the two adjacent fourth holes 2421 is B4, and the radii of the circumcircles of the contours of the fourth holes 2421 are R4, satisfying: A4 = B4 - 2 × R4. (22) Along the width direction of the first groove 2121, a distance between a fourth hole 2421 close to the edge of the fourth perforated portion 242 and the edge of the fourth perforated portion 242 is 0.2 mm to 0.5 mm, so as to reduce the probability that the lithium ions of the positive active material blocked by the first positive electrode insulation layer 24 are released by bypassing the edge of the fourth perforated portion 242 in the width direction of the first groove 2121. It is assumed that a distance between the fourth hole 2421 and the edge of the fourth perforated portion 242 along the width direction of the first groove 2121 is C4, and a distance between the center of the circumcircle of the contour of the fourth hole 2421 and the edge of the fourth perforated portion 242 along the width direction of the first groove 2121 is D4, satisfying: C4 = D4 - R4. (23) Along the length direction of the first groove 2121, a distance between a fourth hole 2421 close to the edge of the fourth perforated portion 242 and the edge of the fourth perforated portion 242 is 0.2 mm to 0.5 mm, so as to reduce the probability that the lithium ions of the positive active material blocked by the first positive electrode insulation layer 24 are released by bypassing the edge of the fourth perforated portion 242 in the length direction of the first groove 2121. It is assumed that a distance between the fourth hole 2421 and the edge of the fourth perforated portion 242 along the length direction of the first groove 2121 is E4, and a distance between the center of the circumcircle of the contour of the fourth hole 2421 and the edge of the fourth perforated portion 242 along the length direction of the first groove 2121 is F4, satisfying: E4 = F4 - R4. (24) The shape of the fourth hole 2421 is at least one of a circle, an ellipse, or a polygon.

In some embodiments, the first positive electrode insulation layer 24 includes a fifth perforated portion 243. Along the width direction of the first groove 2121, the fifth perforated portion 243 is connected to one side of the second main portion 241 facing away from the fourth perforated portion 242. The fifth perforated portion 243 is provided with a fifth hole 2431. By connecting the other side of the second main portion 241 along the width direction of the first groove 2121 to the fifth perforated portion 243 provided with the fifth hole 2431, this application enables the positive active material covered by the first positive electrode insulation layer 24 to release lithium ions through the fifth hole 2431, thereby reducing the probability that the lithium ions in the positive active material covered by the first positive electrode insulation layer 24 bypass the first positive electrode insulation layer 24 and move to the negative electrode plate 22 on the opposite side. This reduces the probability of lithium plating caused by an excessive lithium ion concentration at a local position of the negative electrode plate 22, and improves the utilization rate of the positive active material of the positive electrode plate 21, thereby increasing the energy density.

In some embodiments, the first positive electrode insulation layer 24 satisfies at least one of the following characteristics: (25) A ratio of an area of the fifth perforated portion 243 to an area of the second main portion 241 is 0.01 : 1 to 0.5 : 1, so as to reduce the probability of lithium plating due to an excessive lithium ion concentration at a local position of the negative electrode plate 22 while avoiding an excessively large area of the fifth perforated portion 243, and in turn, alleviate the reduction in the energy density of the secondary battery 100 caused by the fifth perforated portion 243 with a relatively large area; The shapes of the fifth perforated portion 243 and the second main portion 241 are preferably rectangular, and the lengths of the fifth perforated portion 243 and the second main portion 241 along the length direction of the first groove 2121 are the same. Therefore, the ratio of the area of the fifth perforated portion 243 to the area of the second main portion 241 is equal to the ratio of the width of the fifth perforated portion 243 to the width of the second main portion 241 along the width direction of the first groove 2121. (26) A minimum diameter of a circumcircle of a contour of the fifth hole 2431 is 0.2 mm to 1.0 mm, so that the positive active material blocked by the first positive electrode insulation layer 24 can favorably release lithium ions through the fifth hole 2431. (27) The fifth perforated portion 243 is provided with a plurality of fifth holes 2431, and a spacing between two adjacent fifth holes 2431 is 0.2 mm to 0.5 mm, so that the positive active material blocked by the first positive electrode insulation layer 24 can evenly release lithium ions through the fifth holes 2431. It is assumed that a spacing between two adjacent fifth holes 2431 is A5, a distance between centers of circumcircles of the contours of the two adjacent fifth holes 2431 is B5, and the radii of the circumcircles of the contours of the fifth holes 2431 are R5, satisfying: A5 = B5 - 2 × R5. (28) Along the width direction of the first groove 2121, a distance between a fifth hole 2431 close to the edge of the fifth perforated portion 243 and the edge of the fifth perforated portion 243 is 0.2 mm to 0.5 mm, so as to reduce the probability that the lithium ions of the positive active material blocked by the first positive electrode insulation layer 24 are released by bypassing the edge of the fifth perforated portion 243 in the width direction of the first groove 2121. It is assumed that a distance between the fifth hole 2431 and the edge of the fifth perforated portion 243 along the width direction of the first groove 2121 is C5, and a distance between the center of the circumcircle of the contour of the fifth hole 2431 and the edge of the fifth perforated portion 243 along the width direction of the first groove 2121 is D5, satisfying: C5 = D5 - R5. (29) Along the length direction of the first groove 2121, a distance between a fifth hole 2431 close to the edge of the fifth perforated portion 243 and the edge of the fifth perforated portion 243 is 0.2 mm to 0.5 mm, so as to reduce the probability that the lithium ions of the positive active material blocked by the first positive electrode insulation layer 24 are released by bypassing the edge of the fifth perforated portion 243 in the length direction of the first groove 2121. It is assumed that a distance between the fifth hole 2431 and the edge of the fifth perforated portion 243 along the length direction of the first groove 2121 is E5, and a distance between the center of the circumcircle of the contour of the fifth hole 2431 and the edge of the fifth perforated portion 243 along the length direction of the first groove 2121 is F5, satisfying: E5 = F5 - R5. (30) The shape of the fifth hole 2431 is at least one of a circle, an ellipse, or a polygon.

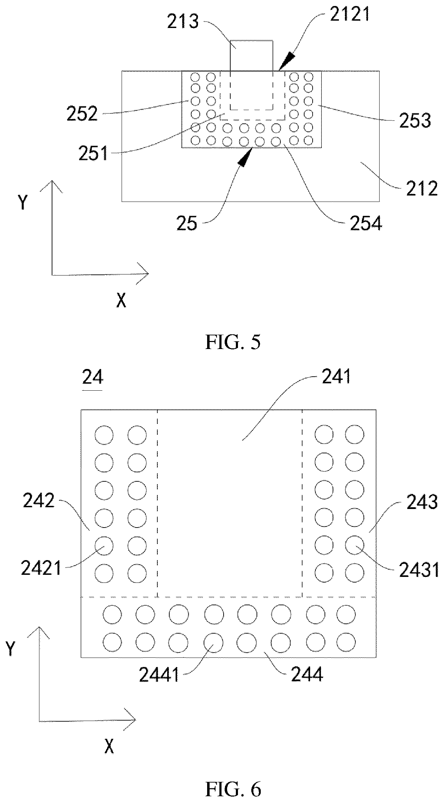

In some embodiments, the first positive electrode insulation layer 24 includes a sixth perforated portion 244. Along the length direction of the first groove 2121, the sixth perforated portion 244 is connected to one side of the second main portion 241 close to the bottom of the first groove 2121. The sixth perforated portion 244 is provided with a sixth hole 2441, thereby enabling the positive active material covered by the first positive electrode insulation layer 24 to release lithium ions through the sixth hole 2441, thereby reducing the probability that the lithium ions in the positive active material covered by the first positive electrode insulation layer 24 bypass the first positive electrode insulation layer 24 and move to the negative electrode plate 22 on the opposite side. This reduces the probability of lithium plating caused by an excessive lithium ion concentration at a local position of the negative electrode plate 22, and improves the utilization rate of the positive active material of the positive electrode plate 21, thereby increasing the energy density. In this application, the boundaries of the regions in the second main portion 241, the fourth perforated portion 242, the fifth perforated portion 243, and the sixth perforated portion 244 are indicated by the dashed lines shown in FIG. 6.

In some embodiments, the first positive electrode insulation layer 24 satisfies at least one of the following characteristics: (31) A ratio of an area of the sixth perforated portion 244 to an area of the second main portion 241 is 0.001 : 1 to 0.2 : 1, so as to reduce the probability of lithium plating due to an excessive lithium ion concentration at a local position of the negative electrode plate 22 while avoiding an excessively large area of the sixth perforated portion 244, and in turn, alleviate the reduction in the energy density of the secondary battery 100 caused by the sixth perforated portion 244 with a relatively large area; The shapes of the sixth perforated portion 244 and the second main portion 241 are preferably rectangular. Along the width direction of the first groove 2121, the width of the sixth perforated portion 244 is equal to a sum of the width of the second main portion 241, the width of the fourth perforated portion 242, and the width of the fifth perforated portion 243. Because both the width of the fourth perforated portion 242 and the width of the fifth perforated portion 243 are smaller than the width of the second main portion 241, the width of the fourth perforated portion 242 and the width of the fifth perforated portion 243 are ignorable. In other words, the width of the sixth perforated portion 244 is approximately equal to the width of the second main portion 241. Therefore, the ratio of the area of the sixth perforated portion 244 to the area of the second main portion 241 is approximately equal to the ratio of the length of the sixth perforated portion 244 to the length of the second main portion 241 along the length direction of the first groove 2121. (32) A minimum diameter of a circumcircle of a contour of the sixth hole 2441 is 0.2 mm to 1.0 mm, so that the positive active material blocked by the first positive electrode insulation layer 24 can favorably release lithium ions through the sixth hole 2441. (33) The sixth perforated portion 244 is provided with a plurality of sixth holes 2441, and a spacing between two adjacent sixth holes 2441 is 0.2 mm to 0.5 mm, so that the positive active material blocked by the first positive electrode insulation layer 24 can evenly release lithium ions through the sixth holes 2441. It is assumed that a spacing between two adjacent sixth holes 2441 is A6, a distance between centers of circumcircles of the contours of the two adjacent sixth holes 2441 is B6, and the radii of the circumcircles of the contours of the sixth holes 2441 are R6, satisfying: A6 = B6 - 2 × R6. (34) Along the length direction of the first groove 2121, a distance between a sixth hole 2441 close to the edge of the sixth perforated portion 244 and the edge of the sixth perforated portion 244 is 0.2 mm to 0.5 mm, so as to reduce the probability that the lithium ions of the positive active material blocked by the first positive electrode insulation layer 24 are released by bypassing the edge of the sixth perforated portion 244 in the length direction of the first groove 2121. It is assumed that a distance between the sixth hole 2441 and the edge of the sixth perforated portion 244 along the length direction of the first groove 2121 is C6, and a distance between the center of the circumcircle of the contour of the sixth hole 2441 and the edge of the sixth perforated portion 244 along the length direction of the first groove 2121 is D6, satisfying: C6 = D6 - R6. (35) Along the width direction of the first groove 2121, a distance between a sixth hole 2441 close to the edge of the sixth perforated portion 244 and the edge of the sixth perforated portion 244 is 0.2 mm to 0.5 mm, so as to reduce the probability that the lithium ions of the positive active material blocked by the first positive electrode insulation layer 24 are released by bypassing the edge of the sixth perforated portion 244 in the width direction of the first groove 2121. It is assumed that a distance between the sixth hole 2441 and the edge of the sixth perforated portion 244 along the width direction of the first groove 2121 is E6, and a distance between the center of the circumcircle of the contour of the sixth hole 2441 and the edge of the sixth perforated portion 244 along the width direction of the first groove 2121 is F6, satisfying: E6 = F6 - R6. (36) The shape of the sixth hole 2441 is at least one of a circle, an ellipse, or a polygon.

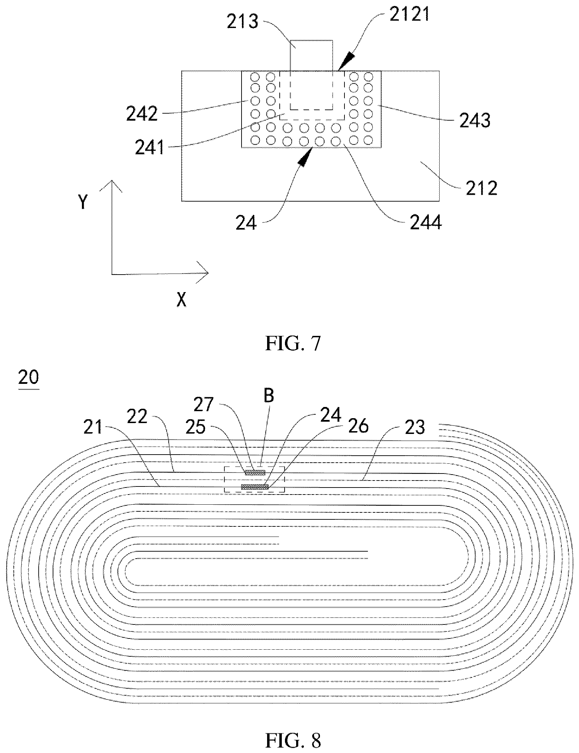

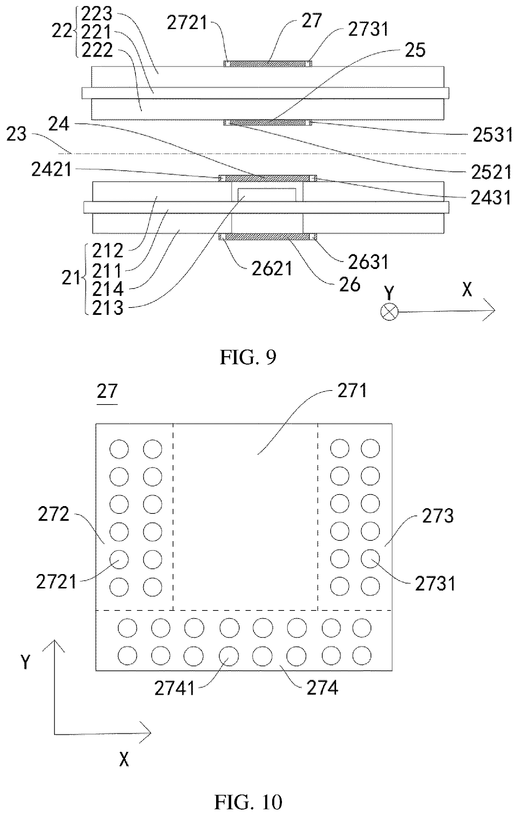

In some embodiments, referring to FIG. 8 and FIG. 9, the positive electrode plate 21 includes a second positive active material layer 214. Along the thickness direction of the positive current collector 211, a surface of the positive current collector 211 facing away from the first positive active material layer 212 is provided with the second positive active material layer 214. The second positive active material layer 214 is provided with a second groove 2141. The second groove 2141 is configured to provide a receiving space for a device for welding the positive tab 213. The surface of the second positive active material layer 214 facing the negative electrode plate 22 is provided with a second positive electrode insulation layer 26. The second positive electrode insulation layer 26 covers the second groove 2141, thereby reducing the probability of contact between the positive current collector 211 exposed by the second groove 2141 and the negative electrode plate 22. The negative electrode plate 22 includes a second negative active material layer 223. The surface of the negative current collector 221 facing away from the first negative active material layer 222 is provided with the second negative active material layer 223. The surface of the second negative active material layer 223 facing the second positive active material layer 214 is provided with a second negative electrode insulation layer 27. Along a direction perpendicular to a surface of the second negative electrode insulation layer 27, a projection of the second negative electrode insulation layer 27 on the second positive active material layer 214 covers the second groove 2141, thereby reducing the probability that the metal burrs of the positive current collector 211 pierce the separator 23 and then contact the negative electrode plate 22. Along the width direction (first direction X) of the second groove 2141, a seventh hole 2721 is provided on one side of the second negative electrode insulation layer 27 to reduce the probability of lithium plating of the negative electrode plate 22 on one side of the second negative electrode insulation layer 27.

Regarding the second positive active material layer 214, the second positive active material layer 214 is infiltrated by an electrolyte solution in the housing 10 to undergo electrochemical reactions. The second positive active material layer 214 includes a second positive active material, a conductive agent, a binder, and the like. The above materials are mixed and stirred well and applied onto one surface of the positive current collector 211 facing away from the first positive active material layer 212, so as to form the second positive active material layer 214. The second positive active material may include at least one of lithium nickel cobalt manganese oxide, lithium cobalt oxide, lithium iron phosphate, lithium nickel cobalt aluminum oxide, lithium manganese oxide, or lithium manganese iron phosphate.

Regarding the second negative active material layer 223, the second negative active material layer 223 is infiltrated by the electrolyte solution in the housing 10 to undergo electrochemical reactions. The second negative active material layer 223 includes a second negative active material, a conductive agent, a binder, and the like. The above materials are mixed and stirred well and applied onto one surface of the negative current collector 221 facing away from the first negative active material layer 222, so as to form the second negative active material layer 223. The second negative active material may include at least one of graphite, silicon, hard carbon, or carbon fiber.

In some embodiments, referring to FIG. 9, FIG. 10, and FIG. 11, the second negative electrode insulation layer 27 includes a seventh perforated portion 272 and a third main portion 271. Along the width direction of the second groove 2141, the seventh perforated portion 272 is connected to one side of the third main portion 271. The seventh perforated portion 272 is provided with a seventh hole 2721. Along a direction perpendicular to the surface of the second negative electrode insulation layer 27, a projection of the third main portion 271 on the second positive active material layer 214 covers the second groove 2141, thereby causing the third main portion 271 to block the second groove 2141, and consequently to block the metal burrs of the positive current collector 211, and in turn, reducing the probability that the metal burrs pierce the separator 23 and then contact the negative electrode plate 22. Preferably, the second negative electrode insulation layer 27 includes an eighth perforated portion 273. Along the width direction of the second groove 2141, the eighth perforated portion 273 is connected to the other side of the third main portion 271 facing away from the seventh perforated portion 272. The eighth perforated portion 273 is provided with an eighth hole 2731 to reduce the probability of lithium plating on the other side of the second negative electrode insulation layer 27 in the width direction of the second groove 2141. Preferably, the second negative electrode insulation layer 27 includes a ninth perforated portion 274. Along the length direction (second direction Y) of the second groove 2141, the ninth perforated portion 274 is connected to one side of the third main portion 271 close to the bottom of the second groove 2141. The ninth perforated portion 274 is provided with a ninth hole 2741 to reduce the probability of lithium plating of the second negative electrode insulation layer 27 on one side close to the bottom of the second groove 2141. In this application, the boundaries of the regions in the third main portion 271, the seventh perforated portion 272, the eighth perforated portion 273, and the ninth perforated portion 274 are indicated by the dashed lines shown in FIG. 10.

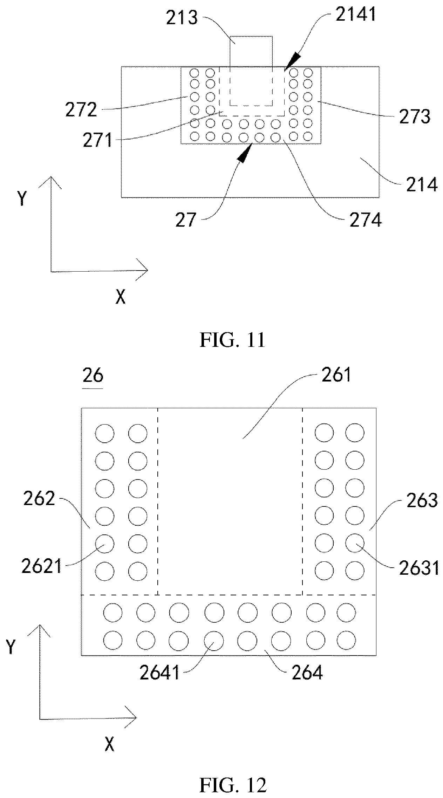

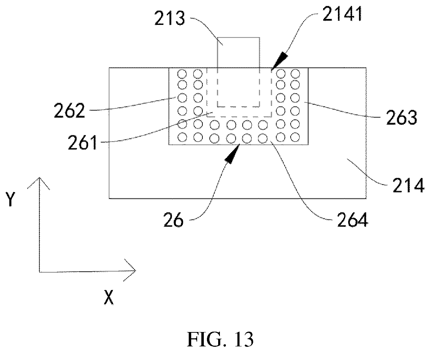

In some embodiments, referring to FIG. 9, FIG. 12, and FIG. 13, the second positive electrode insulation layer 26 includes a tenth perforated portion 262 and a fourth main portion 261. Along the width direction of the second groove 2141, the tenth perforated portion 262 is connected to one side of the fourth main portion 261. The tenth perforated portion 262 is provided with a tenth hole 2621, thereby enabling the positive active material covered by the second positive electrode insulation layer 26 to release lithium ions through the tenth hole 2621, thereby reducing the probability that the lithium ions in the positive active material covered by the second positive electrode insulation layer 26 bypass the second positive electrode insulation layer 26 and move to the negative electrode plate 22 on the opposite side. Along a direction perpendicular to the surface of the second positive electrode insulation layer 26, a projection of the fourth main portion 261 on the second positive active material layer 214 covers the second groove 2141, thereby causing the fourth main portion 261 to block the second groove 2141, and consequently to block the metal burrs of the positive current collector 211, and in turn, reducing the probability that the metal burrs pierce the separator 23 and then contact the negative electrode plate 22. Preferably, the second positive electrode insulation layer 26 includes an eleventh perforated portion 263. Along the width direction of the second groove 2141, the eleventh perforated portion 263 is connected to the other side of the fourth main portion 261 facing away from the eleventh perforated portion 262. The eleventh perforated portion 263 is provided with an eleventh hole 2631, thereby enabling the positive active material covered by the second positive electrode insulation layer 26 to release lithium ions through the eleventh hole 2631, thereby reducing the probability that the lithium ions in the positive active material covered by the second positive electrode insulation layer 26 bypass the second positive electrode insulation layer 26 and move to the negative electrode plate 22 on the opposite side. Preferably, the second positive electrode insulation layer 26 includes a twelfth perforated portion 264. Along the length direction of the second groove 2141, the twelfth perforated portion 264 is connected to one side of the fourth main portion 261 close to the bottom of the second groove 2141. The twelfth perforated portion 264 is provided with a twelfth hole 2641, thereby enabling the positive active material covered by the second positive electrode insulation layer 26 to release lithium ions through the twelfth hole 2641, thereby reducing the probability that the lithium ions in the positive active material covered by the second positive electrode insulation layer 26 bypass the second positive electrode insulation layer 26 and move to the negative electrode plate 22 on the opposite side. In this application, the boundaries of the regions in the fourth main portion 261, the tenth perforated portion 262, the eleventh perforated portion 263, and the twelfth perforated portion 264 are indicated by the dashed lines shown in FIG. 12.

In some embodiments, the secondary battery 100 satisfies at least one of the following characteristics: (37) A thickness of the first positive electrode insulation layer 24 is H₁, satisfying: 4 µm ≤ H₁ ≤ 30 µm, so that the first positive electrode insulation layer 24 is highly resistant to puncture while the first positive electrode insulation layer 24 is not excessively thick, thereby alleviating the reduction in the energy density of the secondary battery 100. (38) A thickness of the first negative electrode insulation layer 25 is H₂, satisfying: 4 µm ≤ H₂ ≤ 30 µm, so that the first negative electrode insulation layer 25 is highly resistant to puncture while the first negative electrode insulation layer 25 is not excessively thick, thereby alleviating the reduction in the energy density of the secondary battery 100. (39) The first positive electrode insulation layer 24 includes at least one of polystyrene, modified polystyrene, poly(styrene-co-isoprene-co-styrene), polyolefin, polyethylene terephthalate, or polyimide, so as to endow the first positive electrode insulation layer 24 with good insulation performance. (40) The first negative electrode insulation layer 25 includes at least one of polystyrene, modified polystyrene, poly(styrene-co-isoprene-co-styrene), polyolefin, polyethylene terephthalate, or polyimide, so as to endow the first negative electrode insulation layer 25 with good insulation performance.

Preferably, the thickness of the second positive electrode insulation layer 26 is H₃, satisfying: 4 µm ≤ H₃ ≤ 30 µm, so that the second positive electrode insulation layer 26 is highly resistant to puncture while the second positive electrode insulation layer 26 is not excessively thick, thereby alleviating the reduction in the energy density of the secondary battery 100. The thickness of the second negative electrode insulation layer 27 is H₄, satisfying: 4 µm ≤ H₄ ≤ 30 µm, so that the second negative electrode insulation layer 27 is highly resistant to puncture while the second negative electrode insulation layer 27 is not excessively thick, thereby alleviating the reduction in the energy density of the secondary battery 100. The second positive electrode insulation layer 26 includes at least one of polystyrene, modified polystyrene, poly(styrene-co-isoprene-co-styrene), polyolefin, polyethylene terephthalate, or polyimide, so as to endow the second positive electrode insulation layer 26 with good insulation performance; and The second negative electrode insulation layer 27 includes at least one of polystyrene, modified polystyrene, poly(styrene-co-isoprene-co-styrene), polyolefin, polyethylene terephthalate, or polyimide, so as to endow the second negative electrode insulation layer 27 with good insulation performance.

Preferably, the first positive electrode insulation layer 24, the first negative electrode insulation layer 25, the second positive electrode insulation layer 26, and the second negative electrode insulation layer 27 each include an adhesive layer and a substrate layer. The adhesive layer is disposed on one surface of the substrate layer. The adhesive layer includes polyolefin and/or modified polyolefin as well as an elastomer, a filler, and an antioxidant. The elastomer includes at least one of poly(styrene-b-ethylene-b-butylene-b-styrene), polyurethane, polyamide, polybutadiene, or polyisobutylene. The filler includes at least one of titanium dioxide powder, talcum powder, white carbon black, or calcium carbonate. The antioxidant includes at least one of diphenylamine, trimethyl phosphite, triethyl phosphite, or distearyl thiodipropionate. The substrate layer includes at least one of polyethylene terephthalate, polyimide, or polypropylene.

According to a second aspect of this application, an electronic device is further disclosed. The electronic device includes the secondary battery 100 disclosed in any one of the embodiments in the first aspect described above. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as game console, electric car toy, electric ship toy, electric airplane toy, and the like. The spacecraft may include airplane, rocket, space shuttle, spaceship, and the like.

### Performance Test

### 1. Lithium plating test

Lithium plating test for a lithium-ion battery at 45 °C: Leaving a lithium-ion battery to stand for 5 minutes at 45 °C, charging the battery at a constant current of 1.5C until the voltage reaches 4.25 V, and then charging the battery at a constant current of 1.2C until 4.48 V, and then charging the battery at a constant voltage of 4.48 V until the current tapers off to 0.02C. Leaving the battery to stand for 5 minutes, and then discharging the battery at a constant current of 1C until the voltage drops to 3.4 V, and then discharging the battery at a constant current of 0.2C until the voltage drops to 3.0 V. Repeating the above steps 700 times, and then leaving the battery to stand for 5 minutes, and then charging the battery at a constant current of 1C until the voltage reaches 4.48 V. Subsequently, charging the battery at a constant voltage of 4.48 V until the current tapers off to 0.02C. Finally, leaving the battery to stand for 5 minutes. Disassembling the battery and observing the lithium plating degree at the edges of the first negative electrode insulation layer and the second negative electrode insulation layer.

Regarding the method for calculating the lithium plating degree at the edge of the first negative electrode insulation layer, a lithium plating area at the edge of the first negative electrode insulation layer that is not perforated is denoted as S11, the lithium plating area at the edge of the first negative electrode insulation layer in any embodiment or comparative embodiment is denoted as S12, and the lithium plating degree at the edge of the first negative electrode insulation layer in any embodiment or comparative embodiment is denoted as V1, calculated as: V1 = S12/S11. Regarding the method for calculating the lithium plating degree at the edge of the second negative electrode insulation layer, a lithium plating area at the edge of the second negative electrode insulation layer that is not perforated is denoted as S21, the lithium plating area at the edge of the second negative electrode insulation layer in any embodiment or comparative embodiment is denoted as S22, and the lithium plating degree at the edge of the second negative electrode insulation layer in any embodiment or comparative embodiment is denoted as V2, calculated as: V2 = S22/S21.

### 2. Bonding force test

Affixing the insulation layer in each embodiment and the adhesive tape in the comparative embodiment onto aluminum foil separately. Cutting the aluminum foil with the affixed adhesive tape into strip specimens of 20 mm × 60 mm in size. Hot-pressing a specimen at a temperature of 85 °C and a pressure of 1 MPa for 40 minutes, and then soaking the specimen in an electrolyte solution at 85 °C for 4 hours. Subsequently, affixing the specimen onto a steel sheet with (Nitto 5000NS) double-sided tape (the adhesion length is not less than 40 mm), and affixing the steel sheet to a corresponding position of a GoTech tensile machine. Pulling up the other end of the specimen, where the other end is not affixed to the steel sheet. Placing the specimen into a grip to clamp the specimen. Leaving the pulled-up part of the specimen to be at an 180° angle to the steel sheet in space. Pulling the specimen at a speed of 50 mm/min through the grip. Ultimately, recording an average of tensile forces in a steady region as a bonding force after soaking in the electrolyte solution.

The organic solvent of the electrolyte solution is: ethylene carbonate (EC), propylene carbonate (PC), diethyl carbonate (DEC), and ethyl propionate (EP), mixed at a mass ratio of EC : PC : DEC : EP = 3 : 1 : 3 : 3. The solute is lithium hexafluorophosphate (LiPF₆), and the concentration of LiPF₆ is 1 mol/L.

### Embodiment 1

### <Preparing a positive electrode plate>

Mixing lithium cobalt oxide (LiCoO₂) as a positive active material, conductive carbon black (Super P) as a conductive agent, and polyvinylidene difluoride as a binder at a mass ratio of 96 : 2.0 : 2.0, adding N-methyl-pyrrolidone (NMP), and mixing well with a vacuum mixer to obtain a positive slurry, in which the solid content is 75 wt%. Coating one surface of a 9 µm-thick positive current collector aluminum foil with the positive electrode slurry evenly, and drying the aluminum foil at 85 °C to obtain a positive electrode plate coated with a 110 µm-thick positive active material layer on a single side. Repeating the foregoing steps on the other surface of the aluminum foil to obtain a positive electrode plate coated with the positive active material on both sides. Subsequently, performing cold-pressing, cutting, and slitting, and drying the electrode plate in an 85 °C vacuum environment for 8 hours to obtain a positive electrode plate of 74 mm × 851 mm in size, where the positive electrode plate includes one positive tab. Creating a first groove by laser-cleaning.

### <Preparing a negative electrode plate>

Mixing artificial graphite as a negative active material, Super P as a conductive agent, sodium carboxymethyl cellulose (CMC) as a thickener, and styrene-butadiene rubber (SBR) as a binder at a mass ratio of 97.4 : 1.2 : 0.7 : 0.7. Adding deionized water, and mixing well with a vacuum mixer to obtain a negative electrode slurry in which the solid content is 70 wt%. Coating one surface of a 6-µm thick negative current collector copper foil with the negative electrode slurry evenly, and drying the copper foil at 110 °C to obtain a negative electrode plate coated with a 130 µm-thick negative active material layer on a single side. Repeating the foregoing steps on the other surface of the aluminum foil to obtain a negative electrode plate coated with the negative active material on both sides. Subsequently, performing cold-pressing, cutting, and slitting, and drying the electrode plate in a 120 °C vacuum environment for 12 hours to obtain a negative electrode plate of 76 mm × 867 mm in size.

### <Preparing a separator>

Using a polyethylene porous polymer film as a separator.

### <Preparing an electrolyte solution>

Mixing ethylene carbonate (EC), propylene carbonate (PC), and ethyl propionate (EP) evenly at a mass ratio of 1 : 1 : 1 in an argon-atmosphere glovebox in which the moisture content is less than 10 ppm, so as to form a base solvent. Finally, adding LiPF₆ as a lithium salt, dissolving the lithium salt, and stirring well to form an electrolyte solution. Based on the total mass of the electrolyte solution, the mass percent of LiPF₆ is 12.5%, and the remainder is the base solvent.

### <Preparing an insulation layer>

The insulation layer includes an adhesive layer disposed on one surface of the substrate layer. The thickness of the insulation layer is 20 µm, the thickness of the adhesive layer is 10 µm, and the thickness of the substrate layer is 10 µm.

Mixing well polypropylene, polyurethane as an elastomer, titanium dioxide powder as a filler, and diphenylamine as an antioxidant at a mass ratio of 60 : 25 : 7.5 : 7.5, and then applying the mixture onto a substrate layer, and drying the mixture at 120 °C to obtain an insulation layer. The substrate layer is a polyethylene terephthalate film.

Dividing the insulation layer into a first perforated portion and a first main portion in the width direction, where the ratio of the area of the first perforated portion to the area of the first main portion is 0.5 : 1. Punching circular holes in the first perforated portion with a hole spacing of 0.5 mm and a hole diameter of 1 mm by a laser perforation method to obtain a first negative electrode insulation layer.

Selecting the non-perforated insulation layer as a first positive electrode insulation layer.

### <Preparing a lithium-ion battery>

Affixing the first positive electrode insulation layer onto a surface of the first positive active material layer to cover the first groove. Affixing the first negative electrode insulation layer onto a surface of the first negative active material layer at a position opposite to the first groove. Subsequently, stacking the positive electrode plate, separator, and negative electrode plate sequentially in such a way that the separator is located between the positive electrode plate and the negative electrode plate to serve a function of separation, and winding the stacked structure to obtain an electrode assembly. Placing the electrode assembly into an aluminum laminated film pocket, drying the pocket, and then injecting the electrolyte solution. Performing steps such as vacuum sealing, static standing, chemical formation, capacity grading, degassing, and edge trimming to obtain a lithium-ion battery. The criteria of the chemical formation are as follows: charging the battery at a constant current of 0.02C until the voltage reaches 3.3 V, and then charging the battery at a constant current of 0.1C until the voltage reaches 3.6 V, and finally, charging the battery at a constant current of 0.2C until the voltage reaches 4.45 V.

The relevant parameters in Comparative Embodiment 1 and Embodiments 2 to 6 are shown in Table 1 below.

The first negative electrode insulation layer and the first positive electrode insulation layer in Comparative Embodiment 1 are not perforated.

In Embodiment 2, the first negative electrode insulation layer is divided into a first perforated portion, a first main portion, and a second perforated portion sequentially along the width direction. The ratio of the area of the first perforated portion to the area of the first main portion is 0.5 : 1. The ratio of the area of the second perforated portion to the area of the first main portion is 0.5 : 1. Circular holes are punched in the first perforated portion and the second perforated portion by a laser perforation method, with a hole spacing being 0.5 mm and a hole diameter being 1 mm.

In Embodiment 3, the first negative electrode insulation layer is divided into a first perforated portion, a first main portion, and a second perforated portion sequentially along the width direction, and a third perforated portion is delineated on one side of the first negative electrode insulation layer along the length direction. The ratio of the area of the first perforated portion to the area of the first main portion is 0.5 : 1. The ratio of the area of the second perforated portion to the area of the first main portion is 0.5 : 1. The ratio of the area of the third perforated portion to the area of the first main portion is 0.2 : 1. Circular holes are punched in the first perforated portion, the second perforated portion, and the third perforated portion by a laser perforation method, with the hole spacing being 0.5 mm and the hole diameter being 1 mm.

In Embodiment 4, the first positive electrode insulation layer is divided into a fourth perforated portion and a second main portion along the width direction. The ratio of the area of the fourth perforated portion to the area of the second main portion is 0.5 : 1. Circular holes are punched in the fourth perforated portion by a laser perforation method, with the hole spacing being 0.5 mm and the hole diameter being 1 mm.

In Embodiment 5, the first positive electrode insulation layer is divided into a fourth perforated portion, a second main portion, and a fifth perforated portion sequentially along the width direction. The ratio of the area of the fourth perforated portion to the area of the second main portion is 0.5 : 1. The ratio of the area of the fifth perforated portion to the area of the second main portion is 0.5 : 1. Circular holes are punched in the fourth perforated portion and the fifth perforated portion by a laser perforation method, with a hole spacing being 0.5 mm and a hole diameter being 1 mm.

In Embodiment 6, the first positive electrode insulation layer is divided into a fourth perforated portion, a second main portion, and a fifth perforated portion sequentially along the width direction, and a sixth perforated portion is delineated on one side of the first positive electrode insulation layer along the length direction. The ratio of the area of the fourth perforated portion to the area of the second main portion is 0.5 : 1. The ratio of the area of the fifth perforated portion to the area of the second main portion is 0.5 : 1. The ratio of the area of the sixth perforated portion to the area of the second main portion is 0.2 : 1. Circular holes are punched in the fourth perforated portion, the fifth perforated portion, and the sixth perforated portion by a laser perforation method, with the hole spacing being 0.5 mm and the hole diameter being 1 mm.

**Table 1**

| | Structure of first negative electrode insulation layer | Structure of first positive electrode insulation layer | Lithium plating degree at edge of first negative electrode insulation layer |
|---|---|---|---|
| Comparative Embodiment 1 | Unperforated | Unperforated | 100% |
| Embodiment 1 | Only first perforated portion is included | Unperforated | 80% |
| Embodiment 2 | First perforated portion and second perforated portion are included | Unperforated | 60% |
| Embodiment 3 | First perforated portion, second perforated portion, and third perforated portion are included | Unperforated | 40% |
| Embodiment 4 | Only first perforated portion is included | Only fourth perforated portion is included | 70% |
| Embodiment 5 | First perforated portion and second perforated portion are included | Fourth perforated portion and fifth perforated portion are included | 40% |
| Embodiment 6 | First perforated portion, second perforated portion, and third perforated portion are included | Fourth perforated portion, fifth perforated portion, and Sixth perforated portion are included | 10% |

As can be seen from Table 1 in conjunction with Comparative Embodiment 1 and Embodiments 1 to 3, the lithium-ion battery in an embodiment of this application can effectively alleviate the lithium plating of the lithium-ion battery by perforating the first negative electrode insulation layer.

As can be seen from Embodiments 1 to 6, the lithium-ion battery in an embodiment of this application can further alleviate the lithium plating of the lithium-ion battery by perforating both the first negative electrode insulation layer and the first positive electrode insulation layer.

The relevant parameters in Embodiments 7 to 12 are shown in Table 2 below. With respect to Embodiments 7 to 12, only the first negative electrode insulation layer is tested. The first negative electrode insulation layer consists of a first main portion and a first perforated portion that are connected to each other.

**Table 2**

| | Ratio of area of first perforated portion to area of first main portion | Bonding force of insulation layer after soaking (N/mm) |
|---|---|---|
| Embodiment 7 | 0.1 : 15 | 0.27 |
| Embodiment 8 | 0.15 : 15 | 0.23 |
| Embodiment 9 | 2 : 15 | 0.21 |
| Embodiment 10 | 6 : 15 | 0.15 |
| Embodiment 11 | 7.5 : 15 | 0.10 |
| Embodiment 12 | 9 : 15 | 0.06 |

As can be seen from Table 2 in conjunction with Embodiments 7 to 12, when the ratio of the area of the perforated portion to the area of the main portion of the insulation layer in an embodiment of this application is greater than 7.5 : 15, the bonding force of the insulation layer is not good. At the same time, in practical applications, when the ratio of the area of the perforated portion to the area of the main portion is lower than 0.15 : 15, it is difficult to effectively reduce the lithium plating degree at the edge of the first negative electrode insulation layer.

Described above are merely some embodiments of this application without limiting the patent scope of this application. Any and or all equivalent structural variations and equivalent process variations made by using the content of the specification and the drawings of this application, and the content hereof used directly or indirectly in any other related technical fields, still fall within the patent protection scope of this application.

## Claims

1. A secondary battery (100), comprising a negative electrode plate (22), a positive electrode plate (21), and a separator (23); wherein the separator (23) is disposed between the negative electrode plate (22) and the positive electrode plate (21); the positive electrode plate (21) comprises a positive current collector (211), a first positive active material layer (212), and a positive tab (213); along a thickness direction of the positive current collector (211), a surface of the positive current collector (211) is provided with the first positive active material layer (212); the first positive active material layer (212) is provided with a first groove (2121); the positive tab (213) is disposed in the first groove (2121) and is electrically connected to the positive current collector (211); **characterized in that**, a first positive electrode insulation layer (24) is disposed on a surface of the first positive active material layer (212) facing the negative electrode plate (22); the first positive electrode insulation layer (24) covers the first groove (2121); a first negative electrode insulation layer (25) is disposed on a surface of the negative electrode plate (22) facing the first positive active material layer (212); along a direction perpendicular to a surface of the first negative electrode insulation layer (25), a projection of the first negative electrode insulation layer (25) on the first positive active material layer (212) covers the first groove (2121); and along a width direction of the first groove (2121), a first hole (2521) is provided on one side of the first negative electrode insulation layer (25).

2. The secondary battery (100) according to claim 1, **characterized in that**, the first negative electrode insulation layer (25) comprises a first perforated portion (252) and a first main portion (251); along the width direction of the first groove (2121), the first perforated portion (252) is connected to one side of the first main portion (251); the first perforated portion (252) is provided with the first hole (2521); and along a direction perpendicular to the surface of the first negative electrode insulation layer (25), a projection of the first main portion (251) on the first positive active material layer (212) covers the first groove (2121); and/or,
along the width direction of the first groove (2121), a width of the first negative electrode insulation layer (25) is less than a width of the first positive electrode insulation layer (24); and/or,
the positive electrode plate (21) comprises a second positive active material layer (214); along the thickness direction of the positive current collector (211), a surface of the positive current collector (211) facing away from the first positive active material layer (212) is provided with the second positive active material layer (214); and the second positive active material layer (214) is provided with a second groove (2141); a second positive electrode insulation layer (26) is disposed on a surface of the second positive active material layer (214) facing the negative electrode plate (22); the second positive electrode insulation layer (26) covers the second groove (2141); a second negative electrode insulation layer (27) is disposed on a surface of the negative electrode plate (22) facing the second positive active material layer (214); along a direction perpendicular to a surface of the second negative electrode insulation layer (27), a projection of the second negative electrode insulation layer (27) on the second positive active material layer (214) covers the second groove (2141); and along a width direction of the second groove (2141), a seventh hole (2721) is provided on one side of the second negative electrode insulation layer (27).

3. The secondary battery (100) according to claim 2, **characterized in that**, along the width direction of the first groove (2121), a width of the first main portion (251) is greater than a width of the first groove (2121) by 0.5 mm to 6 mm; and/or,
the first negative electrode insulation layer (25) satisfies at least one of the following characteristics:
(1) a ratio of an area of the first perforated portion (252) to an area of the first main portion (251) is 0.01 : 1 to 0.5 : 1; or
(2) a shape of the first hole (2521) is at least one of a circle, an ellipse, or a polygon.

4. The secondary battery (100) according to claim 2, **characterized in that**, the first negative electrode insulation layer (25) comprises a second perforated portion (253); along the width direction of the first groove (2121), the second perforated portion (253) is connected to another side of the first main portion (251) facing away from the first perforated portion (252); and the second perforated portion (253) is provided with a second hole (2531).

5. The secondary battery (100) according to claim 4, **characterized in that**, the first negative electrode insulation layer (25) satisfies at least one of the following characteristics:
(3) a ratio of an area of the second perforated portion (253) to an area of the first main portion (251) is 0.01 : 1 to 0.5 : 1; or (4) a shape of the second hole (2531) is at least one of a circle, an ellipse, or a polygon.

6. The secondary battery (100) according to claim 2, **characterized in that**, the first negative electrode insulation layer (25) comprises a third perforated portion (254); along a length direction of the first groove (2121), the third perforated portion (254) is connected to one side of the first main portion (251) close to a bottom of the first groove (2121), and the third perforated portion (254) is provided with a third hole (2541).

7. The secondary battery (100) according to claim 6, **characterized in that**, the first negative electrode insulation layer (25) satisfies at least one of the following characteristics:
(5) a ratio of an area of the third perforated portion (254) to an area of the first main portion (251) is 0.001 : 1 to 0.2 : 1; or
(6) a shape of the third hole (2541) is at least one of a circle, an ellipse, or a polygon.

8. The secondary battery (100) according to claim 1, **characterized in that**, the first positive electrode insulation layer (24) comprises a fourth perforated portion (242) and a second main portion (241); along the width direction of the first groove (2121), the fourth perforated portion (242) is connected to one side of the second main portion (241); the fourth perforated portion (242) is provided with a fourth hole (2421); and along a direction perpendicular to a surface of the first positive electrode insulation layer (24), the fourth perforated portion (242) at least partially overlaps the first positive active material layer (212).

9. The secondary battery (100) according to claim 8, **characterized in that**, along the direction perpendicular to the surface of the first positive electrode insulation layer (24), the second main portion (241) covers the first groove (2121); and along the width direction of the first groove (2121), a width of the second main portion (241) is greater than a width of the first groove (2121) by 0.5 mm to 6 mm.

10. The secondary battery (100) according to claim 8, **characterized in that**, the first positive electrode insulation layer (24) satisfies at least one of the following characteristics:
(7) a ratio of an area of the fourth perforated portion (242) to an area of the second main portion (241) is 0.01 : 1 to 0.5 : 1; or
(8) a shape of the fourth hole (2421) is at least one of a circle, an ellipse, or a polygon.

11. The secondary battery (100) according to claim 8, **characterized in that**, the first positive electrode insulation layer (24) comprises a fifth perforated portion (243); along the width direction of the first groove (2121), the fifth perforated portion (243) is connected to one side of the second main portion (241) facing away from the fourth perforated portion (242); and the fifth perforated portion (243) is provided with a fifth hole (2431).

12. The secondary battery (100) according to claim 11, **characterized in that**, the first positive electrode insulation layer (24) satisfies at least one of the following characteristics:
(9) a ratio of an area of the fifth perforated portion (243) to an area of the second main portion (241) is 0.01 : 1 to 0.5 : 1; or
(10) a shape of the fifth hole (2431) is at least one of a circle, an ellipse, or a polygon.

13. The secondary battery (100) according to claim 8, **characterized in that**, the first positive electrode insulation layer (24) comprises a sixth perforated portion (244); along a length direction of the first groove (2121), the sixth perforated portion (244) is connected to one side of the second main portion (241) close to a bottom of the first groove (2121), and the sixth perforated portion (244) is provided with a sixth hole (2441).

14. The secondary battery (100) according to claim 13, **characterized in that**, the first positive electrode insulation layer (24) satisfies at least one of the following characteristics:
(11) a ratio of an area of the sixth perforated portion (244) to an area of the second main portion (241) is 0.001 : 1 to 0.2 : 1; or
(12) a shape of the sixth hole (2441) is at least one of a circle, an ellipse, or a polygon.

15. The secondary battery (100) according to any one of claims 1 to 14, **characterized in that**, the secondary battery (100) satisfies at least one of the following characteristics:
(13) a thickness of the first positive electrode insulation layer (24) is H₁, 4 µm ≤ H₁ ≤ 30 µm;
(14) a thickness of the first negative electrode insulation layer (25) is H₂, 4 µm ≤ H₂ ≤ 30 µm;
(15) the first positive electrode insulation layer (24) comprises one or more selected from the group consisting of polystyrene, modified polystyrene, poly(styrene-co-isoprene-co-styrene), polyolefin, polyethylene terephthalate, and polyimide; or
(16) the first negative electrode insulation layer (25) comprises one or more selected from the group consisting of polystyrene, modified polystyrene, poly(styrene-co-isoprene-co-styrene), polyolefin, polyethylene terephthalate, and polyimide.

16. An electronic device, **characterized in that**, the electronic device comprises the secondary battery (100) according to any one of claims 1 to 15.
